# EUROPEAN PATENT SPECIFICATION

(11) **EP 1 652 881 B1**
(45) Date of publication and mention of the grant of the patent: **23.11.2011**
(21) Application number: 05256323.6
(22) Date of filing: 11.10.2005
(51) Int. Cl.: C08K 5/18

(54) **Thermal stabilizer compositions for halogen-containing vinyl polymers**
Thermische Stabilisatorzusammensetzung für halogenhaltige Vinylpolymerisate
Composition de stabilisateur thermique pour polymères vinyliques halogénés

(30) Priority: 27.10.2004 US 622366 P
(43) Date of publication of application: 03.05.2006
(73) Proprietor: Rohm and Haas Company, Philadelphia, PA 19106-2399 (US)
(72) Inventor: Austen, Steven Christopher, Loveland Ohio 45140 (US)
(74) Representative: Kent, Venetia Katherine

(56) References cited:
- GB-A- 951 936
- US-A- 2 657 982
- US-A- 4 642 322
- US-A1- 2004 138 354

## Description

### BACKGROUND

This invention relates to stabilizer compositions for halogen-containing vinyl polymers, the stabilized halogen-containing vinyl polymer compositions and articles formed therefrom, and methods for stabilizing halogen-containing vinyl polymers.

Halogen-containing vinyl polymers, for example, poly(vinyl chloride) (PVC), copolymers of vinyl chloride and vinyl acetate, and poly(vinylidene chloride), are commonly used for fabricating a variety of articles such as pipes, window casings, siding, bottles, wall covering, and packaging film. There have been many attempts to add stabilizers to halogen-containing vinyl polymers to improve the color hold in the polymer resins, particularly the color hold within the processing window, e.g., during the initial processing and during any subsequent re-processing. Stabilizer compositions comprising tin, cadmium, and/or lead can be effective for minimizing discoloration during initial processing, as well as during any subsequent re-processing, however, there is interest in developing stabilizer compositions that are free of these metals and/or reducing the amounts of these metals for environmental, cost, and other reasons.

Stabilizers free of tin, cadmium, and/or lead include a type of aromatic amine as described in U.S. Patent No. 4,642,322. The aromatic amines may be mixed with other stabilizers such as epoxidised fatty acid esters, e.g., epoxidized soy bean oil, phosphites, metal carboxylates, metal phenolates, inorganic salts such as ZnCl₂, organo-tin compounds, and antimony- trimercaptocarboxylic acid esters.

Stabilizer compositions comprising other types of amines have also been described. For example, U.S. Patent No. 3,288,744, discloses that tris(hydroxymethyl)aminomethane is useful for stabilizing halogen-containing vinyl polymers, but that other alkanolamines are unexpectedly poorer. DE 101 18 179 A1 discloses stabilizer compositions containing an amino alcohol, together with a perchlorate salt, certain types of enamines, or both. Exemplary enamines include alpha, beta-unsaturated beta-aminocarboxylic acids such as beta-crotonic acid esters and aminouracils.

Nonetheless, there remains a need in the art for improved stabilizer compositions for halogen-containing vinyl polymers that provide improved resistance to discoloration during processing and/or use.

### STATEMENT OF THE INVENTION

The present invention is as set out in the accompanying claims.

It has been found that certain aromatic amines provide synergistic stabilization when combined with particular co-stabilizers.

### DETAILED DESCRIPTION

The terms "a" and "an" herein do not denote a limitation of quantity, but rather denote the presence of at least one of the referenced item. The abbreviation "phr" refers to parts by weight of a particular component per 100 parts by weight of the halogen-containing vinyl polymer.

As used herein, "alkyl" is intended to include both branched and straight-chain saturated aliphatic hydrocarbon groups, having the specified number of carbon atoms. Thus, the term C₁ to C₆ alkyl as used herein includes alkyl groups having 1 to 6 carbon atoms. When C₀ to Cₙ alkyl is used herein in conjunction with another group, for example, (phenyl)C₀ to C₄ alkyl, the indicated group, in this case phenyl, is either directly bound by a single covalent bond (Co), or attached by an alkyl chain having the specified number of carbon atoms, in this case 1 to about 4 carbon atoms. Examples of alkyl include, but are not limited to, methyl, ethyl, n-propyl, isopropyl, n-butyl, t-butyl, n-pentyl, and sec-pentyl.

"Alkenyl" as used herein, indicates a hydrocarbon chain of either a straight or branched configuration having one or more carbon- carbon double bond bonds, which may occur at any stable point along the chain. Examples of alkenyl groups include ethenyl and propenyl.

"Alkoxy" represents an alkyl group as defined above with the indicated number of carbon atoms attached through an oxygen bridge. Examples of alkoxy include, but are not limited to, methoxy, ethoxy, n- propoxy, i- propoxy, n-butoxy,2-butoxy, t-butoxy, n-pentoxy, 2-pentoxy, 3- pentoxy, isopentoxy, neopentoxy, n-hexoxy, 2-hexoxy, 3-hexoxy, and 3- methylpentoxy.

"Alkanoyl" indicates an alkyl group as defined above, attached through a keto (-(C=O)-) bridge. Alkanoyl groups have the indicated number of carbon atoms, with the carbon of the keto group being included in the numbered carbon atoms. For example a C₂alkanoyl group is an acetyl group having the formula CH₃(C=O)-.

As used herein, the term "aryl" indicates aromatic groups containing only carbon in the aromatic ring or rings. Typical aryl groups contain 1 to 3 separate, fused, or pendant rings and 6 to 18 ring atoms, without heteroatoms as ring members. When indicated, such aryl groups may be further substituted with carbon or non-carbon atoms or groups. Such substitution may include fusion to a 5 to 7-membered saturated cyclic group that optionally contains 1 or 2 heteroatoms independently chosen from N, O, and S, to form, for example, a 3,4-methylenedioxyphenyl group. Aryl groups include, for example, phenyl, naphthyl, including 1-naphthyl and 2-naphthyl, and bis-phenyl.

The term "ester alkyl" indicates and alkyl group as define above attached through an ester linkage, i.e. a group of the formula -O(C=O)alkyl.

"Alkoxy carbonyl" refers to an alkoxy group adjacent a carbonyl group, i.e., a group of the formula alkyl -O(C=O)-.

In the term "(aryl)alkyl", aryl and alkyl are as defined above, and the point of attachment is on the alkyl group. This term encompasses, but is not limited to, benzyl, phenylethyl, and piperonyl. Likewise, in the term (aryl)carbohydryl, aryl and carbohydryl are as defined above and the point of attachment is on the carbohydryl group, for example a phenylpropen-1-yl group.

The term "alkylthio" indicates an alkyl group as defined above attached through a sulfur linkage, i.e. a group of the formula alkyl-S-. Examples include ethylthio and pentylthio.

An effective stabilizer composition for halogen-containing vinyl polymers comprises an aromatic amine in combination with at least one additional co-stabilizer. The co-stabilizer comprises an amino alcohol, a perchlorate and a polyol. The aromatic amine provides unexpectedly improved thermal stability through synergistic interactions with other stabilizer components. In a particularly advantageous feature, the aromatic amine can be substituted for one or more components in a standard multi-component thermal stabilizer composition. The aromatic amine may also be added as an additional stabilizer to a multi-component stabilizer composition. Further, the aromatic amine can mitigate UV instability which may occur in certain stabilizer compositions.

The aromatic amine has the formula: 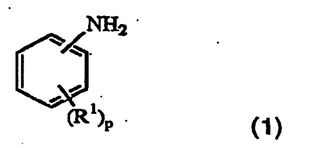 wherein p is 2, and wherein each R¹ is independently H, NO₂, alkenyl, alkoxy, C₁ to C₁₈ ester alkyl, C₁ to C₁₈ alkanoyl, or -(C=O)R², wherein each R² group is C₁ to C₁₈ alkyl
or wherein p=1 and R' is C₁ to C₁₈ alkyl.

In one embodiment, R¹ is NO₂. In this embodiment, the aromatic amine comprises a nitroaniline such as, for example, 4-nitroaniline.

In another embodiment, the aromatic amine has the formula: 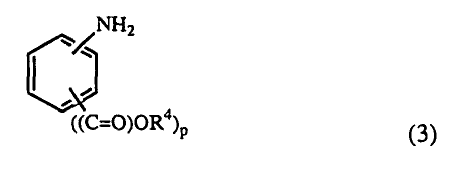 wherein p is 1 and R⁴ is C₁ to C₁₈ alkyl.

Aromatic amines of formula 3 include, for example, ethyl-2-aminobenzoate, ethyl-4-aminobenzoate, and mixtures comprising one or more of the foregoing aromatic amines. The structures of several compounds of formula 3 are listed in Table 2.

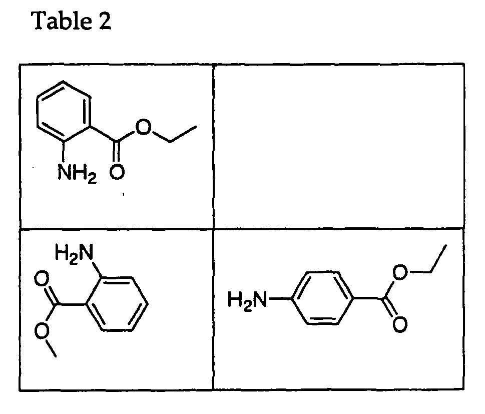

In yet another embodiment, the aromatic amine has the formula 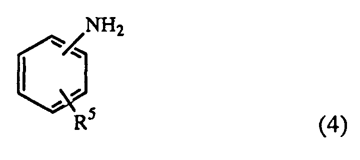 wherein R⁵ is H, or C₁ to C₁₈ alkyl.

Suitable compounds of formula 4 include aniline, p-toluidine, and mixtures comprising one or more of the foregoing aromatic amines.

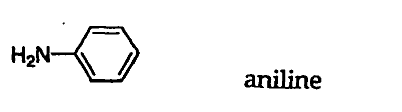

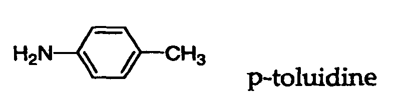

In another embodiment, the aromatic amine is of formula 5 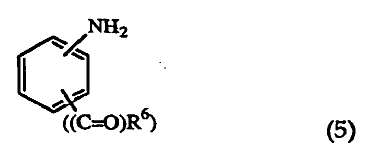 wherein R⁶ is C₁ to C₁₈ alkyl. Suitable compounds of formula 6 include 2-, 3-, and 4-aminoacetophenone.

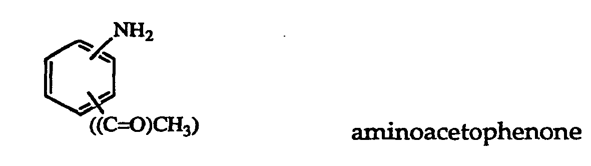

Effective amounts of aromatic amine are 0.001 to 10 parts by weight per hundred parts by weight of resin (phr). In one embodiment, amounts of 0.01 phr to 8 phr may be employed. In another embodiment, amounts of 0.05 phr to 6 phr may be employed. Lesser amounts tend to be ineffective, and greater amounts do not adversely affect the stabilization, but are not necessary, and thus may be uneconomical.

The stabilizer composition includes a co-stabilizer that is an amino alcohols, a perchlorate and a polyol.

Suitable amino alcohols have the structure shown in formula 8: 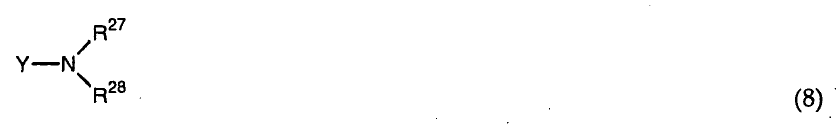 wherein Y is a substituted or unsubstituted C₁-C₃₆ alkyl, alkenyl, aryl, alkylaryl, or arylalkyl group. In one embodiment, Y is a C₁- to C₁₂ alkyl or aryl group, and in another embodiment Y is a C₁ to C₄ alkyl group comprising at least one hydroxy group.

R²⁷ and R²⁸ in formula (8) are each independently hydrogen or a substituted or unsubstituted C₁ to C₃₆ alkyl, alkenyl, aryl, alkylaryl, or arylalkyl group. In one embodiment, R²⁷ and R²⁸ are each independently hydrogen, or a C₁ to C₁₂ alkyl or aryl group, and in another embodiment hydrogen or a C₁ to C₄ alkyl group comprising at least one hydroxy group. Two of Y, R²⁷, or R²⁸ may join together to form a substituted or unsubstituted C₂ to C₃₆ carbocylic or heterocyclic group wherein the heteroatoms are oxygen or sulfur. It is not within the scope of the present invention that two of Y, R²⁷, or R²⁸ join together to form a substituted or unsubstituted heterocyclic group wherein the heteroatom(s) are nitrogen.

Suitable perchlorates include, for example, those of formula M(ClO₄)ₙ, wherein M is H, Li, Na, K, Mg, Ca, Sr, Zn, Al, La or Ce, and n is 1, 2 or 3, depending on the valence of M. The perchlorates may be complexed with a wide variety of alcohols, for example polyols, cyclodextrins, ether alcohols, ester alcohols, polyol partial esters, and mixtures comprising one or more of the foregoing alcohols. Dimers, trimers, oligomers, and polymers, such as di-, tri-, tetra- and poly-glycols, and di-, tri- and tetra-pentaerythritol or polyvinyl alcohol in various degrees of polymerization may also be used. Glycerol monoethers and glycerol monothioethers are preferred as polyol partial ethers. The perchlorates can be introduced in various known forms, for example in the form of a salt or an aqueous solution applied to a substrate, such as PVC, calcium silicate, zeolites, or hydrotalcites. The perchlorates may also be introduced as zeolite or hydrotalcite salts, formed for example, by ion exchange with the corresponding zeolite or hydrotalcite metal salts. When present, the perchlorates can be employed in an amount of, for example, 0.001 phr to 5 phr, or 0.01 phr to 1 phr.

Suitable polyols include, for example, sorbitol, pentaerythritol, dipentaerythritol, tripentaerythritol, bistrimethylolpropane, trimethylolpropane, inosite, polyvinyl alcohol, mannitol, lactose, tris(hydroxyethyl)isocyanurate, tetramethylolcyclohexanol, tetramethylolcyclopyranol, glycerol, diglycerol, polyglycerol, and mixtures comprising one or more of the foregoing polyols. The polyols can be used in an amount of, for example, 0.01 phr to 20 phr, or 0.1 phr to 10 phr.

As used herein, the term halogen-containing vinyl polymer means a halogen-containing polymer in which the halogens are attached directly to a carbon atom. Suitable halogen-containing polymers include, for example, chlorinated polyethylene having 14 to 75%, e.g., 27%, chlorine by weight, chlorinated natural and synthetic rubber, rubber hydrochloride, chlorinated polystyrene, chlorinated poly(vinylidene chloride), chlorinated poly(vinyl chloride), poly(vinyl bromide), poly(vinyl fluoride), other vinyl chloride polymers, and mixtures comprising one or more of the foregoing polymers. The vinyl chloride polymers known as polyvinyl chloride (PVC) are made from vinyl chloride monomers alone or a mixture of monomers comprising, for example, 70% by weight of vinyl chloride, based on the total monomer weight. Suitable co-monomers include, for example, vinyl acetate, vinyl butyrate, vinyl benzoate, vinylidene chloride, trichloroethylene, 1-fluoro-2-chloroethylene, diethyl fumarate, diethyl maleate, methyl acrylate, 2-ethylhexyl acrylate, methyl alpha-chloroacrylate, methyl methacrylate, ethyl methacrylate, butyl methacrylate, styrene, vinyl ketones such as vinyl methyl ketone and vinyl phenyl ketone, acrylonitrile, chloroacrylonitrile, allylidene diacetate, chloroallylidene diacetate, and vinyl ethers such as vinyl ethyl ether, vinyl phenyl ether, the vinyl ether prepared by the reaction of one mole of acrolein with one mole of ethylene glycol divinyl ether, and mixtures comprising one or more of the foregoing co-monomers. Suitable halogen-containing vinyl copolymers include, for example, vinyl chloride-vinyl acetate, vinyl chloride-vinyl acetate (87:13), vinyl chloride-vinyl acetate-maleic anhydride (86:13:1), vinyl chloride-vinylidene chloride (95:5); vinyl chloride-diethyl fumarate (95:5), vinyl chloride 2-ethylhexyl acrylate (80:20), and mixtures comprising one or more of the foregoing copolymers.

A rigid halogen-containing vinyl polymer composition is one that does not contain a plasticizer. A semi-rigid halogen-containing vinyl polymer composition contains 1 to 25 parts of a plasticizer per 100 parts by weight of the halogen-containing vinyl polymer. A flexible halogen-containing vinyl polymer composition contains 25 to 100 parts of a plasticizer per 100 parts by weight of the halogen-containing vinyl polymer. Suitable plasticizers include, for example, alkyl esters of polyacids in which there are 1 to 3 alkyl groups having 8 to 12 carbon atoms. Suitable alkyl groups of the alkyl ester include, for example, n-octyl, 2-ethylhexyl, decyl, dodecyl, and mixtures comprising one or more of the foregoing alkyl groups. Suitable polyacids for the alkyl ester include, for example, phthalic acid, trimellitic acid, benzoic acid, adipic acid, sebacic acid, glutaric acid, phosphates, and the like. Polymeric plasticizers are also suitable.

Optionally, the halogen-containing polymer compositions may include other conventional additives such as, for example, antioxidants, lubricants, fillers, pigments, impact modifiers, processing aids, blowing agents, dyes, ultraviolet light absorbing agents, densifying agents, biocides, and mixtures comprising one or more of the foregoing additives. Suitable amounts of the foregoing additives are readily determined by one of ordinary skill in the art depending on the desired final properties and end use of the compositions. In general, each additive is present in an amount of 0.01 to 10 wt%, preferably 0.1 to 5 wt%, based on the total weight of the halogen-containing vinyl polymer.

Suitable antioxidants include, for example, phenolic antioxidants such as 2,6-di-t-butyl-p-cresol, butylated hydroxyanisole, 4,4'-thiobis(6-t-butyl-m-cresol), 4,4'-cyclohexylidenediphenol, 2,5-di-t-amyl hydroquinone, 4,4'-butylidene bis(6-t-buytl-m-cresol), hydroquinone monobenzyl ether, 2,2'-methylene-bis(4-methyl-6-t-butyl phenol), 2-t-butyl-4-dodecyloxy phenol, p-amino phenol, N-lauryloxy-p-amino phenol, 4,4'-thiobis(3-methyl-6-t-butyl phenol), bis [o-(1,1,3,3-tetramethyl butyl)phenol] sulfide, 4-dodecyoxy-2-hydroxybenzophenone, n-dodecyl ester of 3-hydroxy-4-(phenyl carbonyl)phenoxyacetic acid, t-butyl phenol, and mixtures comprising one or more of the foregoing antioxidants.

Suitable lubricants include, for example, paraffin waxes, salts of fatty acids, low molecular weight polyethylene (i.e., polyethylene wax), fatty acid amides (i.e., laurimide and stearamide), bis amides (i.e., decamethylene, bisamide), fatty acid esters (e.g., butyl stearate, glyceryl stearate, linseed oil, palm oil, decyloleate, corn oil, cottonseed oil, and the like), and mixtures comprising one or more of the foregoing lubricants. Suitable fillers include, for example, calcined clays, calcium carbonate, talcs, and mixtures comprising one or more of the foregoing fillers. Suitable pigments include, for example, titanium dioxide, carbon black, iron oxide, and mixtures comprising one or more of the foregoing pigments.

In general, the above-described thermal stabilizer compositions are provided as a one-part mixture formulated so as to provide an aromatic amine in an amount effective to provide thermal stability. As other optional additives may also be present in the one-part mixture, the particular amount of each component may vary from 0.1 to 99.9% percent by weight, or 1.0 to 99.0% by weight based on the total weight of the one-part mixture. Particular amounts effective to result a synergistic improvement in thermal stability are readily determined by one of ordinary skill in the art.

The halogen-containing vinyl polymer compositions may be prepared by blending under low or high shear. Likewise, the thermal stabilizer compositions may be incorporated in the halogen-containing vinyl polymer composition by mixing the components thereof and the polymer in an appropriate mill or mixer or by another method that provides uniform distribution of the stabilizer throughout the polymer. Depending on the compatibility and physical state (i.e., liquid or solid) the components of the blend may require heating to form a uniform stabilized polymer composition having the desired performance characteristics.

The stabilized halogen-containing vinyl polymer composition can be used to form a variety of rigid articles such as, for example, house siding, window profiles, and pipe using a variety of techniques to shape the articles such as, for example, molding, extrusion, and injection molding.

The invention is further illustrated by the following examples, wherein PVC compositions for thermal stability testing were prepared by mixing, under high shear, 100 parts by weight of PVC resin, pigment (0.1 to 2.0 phr), mold release agents (0.5-2 phr), co-stabilizer (1-10 phr epoxidized soybean oil), and lubricants (0.2 to 5.0 phr), together with the stabilizer compositions shown in the Tables. The mixed compositions were then heated in a two-roll mill at 390°F (199°C) and samples were removed at the indicated time intervals and formed into chips. Color change (as reflected by dE) and yellowness (YI) of each chip was measured using a Hunter Labs (L, a, b) colorimeter.

Examples 1- 5 show the synergistic effects obtained using a combination of an aromatic amine and a perchlorate salt at different ratios.

**Table 3.**

| **Component** | **Example** | | | | |
|---|---|---|---|---|---|
| | **1*** | **2*** | **3*** | **4*** | **5*** |
| Anthranilamide | 1.0 | 0.75 | 0.5 | 0.25 | 0 |
| Sodium perchlorate | 0 | 0.25 | 0.5 | 0.25 | 1.0 |
| | | | | | |

| **dE at minute** | | | | | |
|---|---|---|---|---|---|
| 1 | 19.0 | 20.0 | 21.2 | 26.9 | 32.4 |
| 2 | 25.9 | 23.5 | 26.1 | 32.3 | 39.3 |
| 3 | 31.8 | 29.2 | 31.0 | 35.9 | 43.1 |
| 4 | 39.6 | 32.7 | 33.6 | 39.3 | 46.5 |
| 5 | 47.7 | 35.9 | 36.2 | 42.3 | 49.7 |
| 6 | | 39.5 | 39.8 | 47.0 | |
| 7 | | 43.9 | 44.5 | 49.1 | |
| 8 | | | | | |
| 9 | | | | | |

| | | | | | |
|---|---|---|---|---|---|
| *Control | | | | | |

As shown in Table 3, the combination of an aromatic amine and a perchlorate provides improved stabilization over either stabilizer alone at the same amount of total stabilizer. Comparing examples 2-4, an excess of aromatic amine over perchlorate appears to provide the best stabilization.

Examples 6-10 show the synergistic effects obtained using a combination of equimolar amounts of different aromatic amines and triethanolamine.

**Table 4.**

| **Component** | **Example** | | | | |
|---|---|---|---|---|---|
| | **6*** | **7*** | **8*** | **9*** | **10*** |
| Dimethyl aminoterephthalate | 0.28 | 0 | 0 | 0 | 0 |
| Methyl anthranilate | 0 | 0.20 | 0 | 0 | 0 |
| Ethyl-2-aminobenzoate | 0 | 0 | 0.22 | 0 | 0 |
| Anthranilamide | 0 | 0 | 0 | 0.18 | 0 |
| Ethyl-4-aminobenzoate | 0 | 0 | 0 | 0 | 0.22 |
| Triethanolamine | 0.10 | 0.10 | 0.10 | 0.10 | 0.10 |
| | | | | | |

| **dE at minute** | | | | | |
|---|---|---|---|---|---|
| 1 | 15.6 | 15.9 | 16.5 | 16.6 | 16.0 |
| 2 | 17.2 | 17.9 | 18.2 | 18.5 | 18.0 |
| 3 | 18.7 | 20.3 | 20.9 | 19.8 | 21.2 |
| 4 | 23.9 | 23.6 | 23.8 | 22.7 | 23.7 |
| 5 | 28.4 | 29.2 | 28.2 | 26.6 | 27.9 |
| 6 | 37.0 | 35.1 | 36.3 | 33.0 | 35.4 |
| 7 | 43.2 | 41.8 | 42.3 | 39.4 | 41.2 |
| 8 | 48.7 | 58.1 | 47.3 | 44.3 | 46.2 |
| 9 | 50.7 | 51.8 | 51.8 | 49.1 | 49.6 |
| 10 | | 52.2 | | | |

| | | | | | |
|---|---|---|---|---|---|
| *Control | | | | | |

Examples 6-10 show that equimolar amounts of various aromatic amines exhibit similar stabilization when combined with triethanolamine.

Examples 11- 13 show the synergistic effects obtained using a combination of an aromatic amine, an amino alcohol (triethanolamine), a perchlorate, and a polyol (sorbitol).

**Table 5.**

| **Component** | **Example** | | |
|---|---|---|---|
| | **11*** | **12*** | **13** |
| Aniline | 0 | 0.20 | 0.2 |
| Triethanolamine | 0.10 | | 0.10 |
| Sodium perchlorate | 0.018 | | 0.018 |
| Sorbitol | 0.10 | | 0.10 |
| | | | |

| **dE at minute** | | | |
|---|---|---|---|
| 1 | 18.8 | 17.1 | 16.7 |
| 2 | 23.4 | 22.9 | 16.9 |
| 3 | 26.0 | 31.1 | 19.0 |
| 4 | 29.2 | 41.8 | 20.1 |
| 5 | 32.9 | 49.8 | 22.4 |
| 6 | 34.2 | 60.3 | 25.1 |
| 7 | 37.6 | | 27.5 |
| 8 | 39.7 | | 31.0 |
| 9 | 42.4 | | 34.8 |
| 10 | 45.3 | | 37.2 |
| 11 | 49.6 | | 44.1 |
| 12 | 50.6 | | 50.1 |

| | | | |
|---|---|---|---|
| *Control | | | |

The above data show that aniline provides improved stabilization when added to a combination of triethanolamine, perchlorate, and sorbitol. Thus, an aromatic amine provides suitable stability to PVC compositions when combined with other stabilizers.

Examples 14-20 show the synergistic effects obtained using a combination of an aromatic amine with a perchlorate, triethanolamine, and sorbitol.

**Table 6.**

| **Component** | **Example** | | | | | | |
|---|---|---|---|---|---|---|---|
| | **14*** | **15*** | **16** | **17*** | **18** | **19*** | **20** |
| Sodium perchlorate | 0.018 | | 0.018 | | 0.018 | | 0.018 |
| Triethanolamine | 0.1 | | 0.1 | | 0.1 | | 0.1 |
| Sorbitol | 0.1 | | 0.1 | | 0.1 | | 0.1 |
| 2-aminoacetophenone | | 0.2 | 0.2 | | | | |
| p-toluidine | | | | 0.2 | 0.2 | | |
| 4-nitroaniline | | | | | | 0.2 | 0.2 |
| | | | | | | | |

| dE at minute | | | | | | | |
|---|---|---|---|---|---|---|---|
| 1 | 18.9 | 19.9 | 19.1 | 19.0 | 18.6 | 21.0 | 19.5 |
| 2 | 25.4 | 27.8 | 20.8 | 24.0 | 20.2 | 29.9 | 22.2 |
| 3 | 29.4 | 39.9 | 24.6 | 31.3 | 22.4 | 43.8 | 25.1 |
| 4 | 32.2 | 53.8 | 25.9 | 41.9 | 24.2 | 55.0 | 28.8 |
| 5 | 36.1 | | 27.8 | 53.0 | 28.3 | | 31.1 |
| 6 | 42.4 | | 31.0 | | 32.0 | | 35.6 |
| 7 | 47.8 | | 32.3 | | 37.2 | | 39.0 |
| 8 | 50.0 | | 39.7 | | 42.5 | | 44.4 |
| 9 | 51.6 | | 42.3 | | 47.0 | | 46.9 |
| 10 | 54.1 | | 47.0 | | | | 50.1 |
| 11 | | | 48.2 | | | | |
| 12 | | | 50.2 | | | | |

| | | | | | | | |
|---|---|---|---|---|---|---|---|
| *Control | | | | | | | |

As can be seen from Table 6, the addition of an aromatic amine such as 2-aminoactophenone, p-toluidine or 4-nitroaniline to a stabilizer composition comprising sodium perchlorate, triethanolamine and sorbitol improves stabilization.

Examples 21-29 show the synergistic effects obtained using a combination of an aromatic amine with a perchlorate, triethanolamine, and sorbitol.

**Table 7.**

| **Component** | **Example** | | | | | | | | |
|---|---|---|---|---|---|---|---|---|---|
| | **21*** | **22*** | **23** | **24*** | **25** | **26** | **27*** | **28*** | **29** |
| Sodium perchlorate | 0.018 | | 0.018 | | 0.018 | | 0.018 | | 0.018 |
| Triethanolamine | 0.1 | | 0.1 | | 0.1 | | 0.1 | | 0.1 |
| Sorbitol | 0.1 | | 0.1 | | 0.1 | | 0.1 | | 0.1 |
| Ethyl-2-aminobenzene | | 0.2 | 0.2 | | | | | | |
| Dimethyl aminoterephthalate | | | | 0.2 | 0.2 | | | | |
| Anthranilamide | | | | | | 0.2 | 0.2 | | |
| Ethyl-4-aminobenzoate | | | | | | | | 0.2 | 0.2 |
| | | | | | | | | | |

| dE at minute | | | | | | | | | |
|---|---|---|---|---|---|---|---|---|---|
| 1 | 18.8 | 20.4 | 17.2 | 23.9 | 17.0 | 18.9 | 17.0 | 19.3 | 17.3 |
| 2 | 26.0 | 30.3 | 22.2 | 35.8 | 20.3 | 24.2 | 18.9 | 25.4 | 19.5 |
| 3 | 31.5 | 44.9 | 28.2 | 48.9 | 24.4 | 38.1 | 21.5 | 33.7 | 22.4 |
| 4 | 32.3 | 56.0 | 28.1 | 54.3 | 29.0 | 48.1 | 24.2 | 47.2 | 26.5 |
| 5 | 36.6 | | 28.8 | | 31.6 | 53.5 | 24.7 | 57.0 | 29.0 |
| 6 | 42.5 | | 29.9 | | 34.5 | | 26.6 | | 30.1 |
| 7 | 46.3 | | 35.7 | | 36.2 | | 29.5 | | 31.2 |
| 8 | 49.3 | | 39.1 | | 42.1 | | 34.8 | | 36.6 |
| 9 | 51.1 | | 46.2 | | 44.6 | | 35.9 | | 38.4 |
| 10 | | | 49.1 | | 52.2 | | 36.4 | | 46.0 |
| 11 | | | | | | | 48.5 | | 49.1 |
| 12 | | | | | | | 50.4 | | 52.3 |

| | | | | | | | | | |
|---|---|---|---|---|---|---|---|---|---|
| *Control | | | | | | | | | |

As can be seen from Table 7, the addition of an aromatic amine such as ethyl-2-aminobenzoate, dimethyl aminoterephthalate, anthranilamide, or ethyl-4-aminobenzoate to a stabilizer composition comprising sodium perchlorate, triethanolamine and sorbitol improves stabilization.

## Claims

1. A polymeric composition comprising
a halogen-containing vinyl polymer; and
a stabiliser composition comprising an aromatic amine of formula 1: 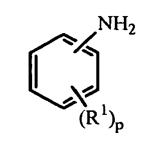 wherein p is 1 or 2, and
wherein each R¹ is independently H, NO₂, alkenyl, alkoxy groups, C₁ to C₁₈ ester alkyl, C₁ to C₁₈ alkanoyl, or
wherein p is 1, and
R¹ is C₁ to C₁₈ alkyl or -(C=O)R², wherein R² is C₁ to C₁₈ alkyl;
and a co-stabilizer, wherein the co-stabilizer comprises an amino alcohol, a perchlorate salt, and a polyol.

2. The polymeric composition of claim 1 wherein the amino alcohol is triethanolamine, the perchlorate salt is sodium perchlorate and the polyol is sorbitol.

## Patentansprüche

1. Polymerzusammensetzung, umfassend
ein halogenhaltiges Vinylpolymer und
eine Stabilisatorzusammensetzung, umfassend ein aromatisches Amin der Formel 1: 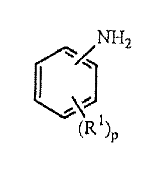 worin p 1 oder 2 ist und
worin R¹ jeweils unabhängig H, NO₂, Alkenyl, Alkoxygruppen, C₁ bis C₁₈ Esteralkyl, C₁ bis C₁₈ Alkanoyl ist oder
worin p 1 ist und
R¹ C₁ bis C₁₈ Alkyl oder -(C=O)R² ist, worin R² C₁ bis C₁₈ Alkyl ist,
und einen Co-stabilisator, wobei der Co-stabilisator ein Aminoalkohol, ein Perchloratsalz und ein Polyol umfaßt.

2. Polymerzusammensetzung gemäß Anspruch 1, wobei der Aminoalkohol Triethanolamin ist, das Perchloratsalz Natriumperchlorat ist und das Polyol Sorbitol ist.

## Revendications

1. Composition polymère comprenant
un polymère vinylique contenant un halogène ; et
une composition de stabilisateur comprenant une amine aromatique de la formule 1 : 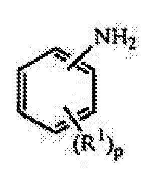 dans laquelle p est égal à 1 ou à 2, et
dans laquelle chaque R¹ est indépendamment H, NO₂, des groupes alcényle, alcoxy, un ester alkylique en C₁-C₁₈, un groupe alcanoyle en C₁-C₁₈, ou
dans laquelle p est égal à 1, et
R¹ est un groupe alkyle en C₁-C₁₈ ou -(C=O)R², où R² est un groupe alkyle en C₁-C₁₈ ;
et un co-stabilisateur, dans laquelle le co-stabilisateur comprenant un amino-alcool, un sel de perchlorate, et un polyol.

2. Composition polymère selon la revendication 1, dans laquelle l'amino-alcool est la triéthanolamine, le sel de perchlorate est le perchlorate de sodium et le polyol est le sorbitol.
